# EUROPEAN PATENT APPLICATION

(11) **EP 4 675 718 A1**
(43) Date of publication of application: **07.01.2026**
(21) Application number: 24763572.5
(22) Date of filing: 08.02.2024
(51) Int. Cl.: H01M 8/04858, H01M 8/04, H01M 8/10, H01M 8/12, H01M 8/04537

(54) **FUEL CELL SYSTEM**

(30) Priority: 28.02.2023 JP 2023029603
(71) Applicant: Panasonic Intellectual Property Management Co., Ltd., Kadoma-shi, Osaka 571-0057 (JP)
(72) Inventor: OKAMOTO, Sohei, Kadoma-shi, Osaka 571-0057 (JP); YAMAGUCHI, Kouhei, Kadoma-shi, Osaka 571-0057 (JP)
(74) Representative: Grünecker Patent- und Rechtsanwälte PartG mbB
(86) International application number: PCT/JP2024/004384
(87) International publication number: WO 2024/181088

(57) **Abstract**

A fuel cell system (100) according to the present disclosure includes: a fuel cell (10); a first input and output terminal (20) to which a first external power source (50) is connected; a second input terminal (22) to which a second external power source (52) is connected; the first input and output terminal (20) to which an AC load is connected; a second output terminal (24) to which a DC load is connected; and a control circuit (32) that performs electrical processing for, when the first external power source (50) is connected to the first input and output terminal (20), converting DC power generated by the fuel cell (10) to AC power and supplying the AC power to the first input and output terminal (20), and for, when the second external power source (52) is connected to the second input terminal (22), supplying the DC power generated by the fuel cell (10) to the second output terminal (24).

## Description

### TECHNICAL FIELD

The present disclosure relates to a fuel cell system.

### BACKGROUND ART

The electric power generated by a fuel cell is direct current (DC) power. In general, DC power is converted to alternating current (AC) power and supplied to a load.

As disclosed in Patent Literature (PTL) 1 and PTL 2, systems that store the electric power generated by fuel cells in storage batteries are also known.

As disclosed in PTL 3, the output of a fuel cell may be connected to an input terminal of a power station of a photovoltaic system.

### CITATION LIST

### PATENT LITERATURE

[PTL 1] Japanese Unexamined Patent Application Publication No. 2015-170420
[PTL 2] Japanese Unexamined Patent Application Publication No. 2007-242528
[PTL 3] Japanese Unexamined Patent Application Publication No. 2020-137305

### SUMMARY OF THE INVENTION

### TECHNICAL PROBLEM

Considering the wide range of applications for fuel cell systems, it is useful for users to be able to select the type of output power. In this case, an output terminal for outputting DC power and an output terminal for outputting AC power are provided in a fuel cell system. A DC load is connected to the output terminal for DC power. An AC load is connected to the output terminal for AC power.

On the other hand, except for fuel cell systems that include storage batteries for stand-alone operation, fuel cell systems require external power sources for startup. It is desirable that a fuel cell system supports a plurality of external power sources, such as a single-phase AC power source and a three-phase AC power source, as this improves the versatility of the fuel cell system. However, in the case of a fuel cell system that includes a plurality of input systems and a plurality of output systems, the installation work of the fuel cell system may be complicated. In addition, there is concern that wiring errors may occur.

In view of the above circumstances, an object of the present disclosure is to facilitate the installation work of a fuel cell system that is capable of outputting both DC power and AC power to the outside.

### SOLUTION TO PROBLEM

The present disclosure provides a fuel cell system that includes: a fuel cell; a first input terminal to which a first external power source is connected; a second input terminal to which a second external power source is connected; a first output terminal to which an AC load is connected; a second output terminal to which a DC load is connected; and a control circuit that performs electrical processing for, when the first external power source is connected to the first input terminal, converting DC power generated by the fuel cell to AC power and supplying the AC power to the first output terminal, and for, when the second external power source is connected to the second input terminal, supplying the DC power generated by the fuel cell to the second output terminal.

### ADVANTAGEOUS EFFECTS OF INVENTION

The technique according to the present disclosure facilitates the installation work of a fuel cell system.

### BRIEF DESCRIPTION OF THE DRAWINGS

[FIG. 1] FIG. 1 is a schematic block diagram illustrating a configuration of a fuel cell system.
[FIG. 2] FIG. 2 is a detailed circuit diagram of a portion of FIG. 1.
[FIG. 3] FIG. 3 is a flowchart of the processing performed by a microcomputer in a control circuit to determine the type of power to be output.

### DESCRIPTION OF EMBODIMENT

Hereinafter, an embodiment will be described in detail with reference to the drawings. However, more detailed explanation than necessary may be omitted. For example, detailed explanations of already well-known matters or duplicate explanations for substantially the same configuration may be omitted.

It should be noted that the accompanying drawings and the following description are provided for those skilled in the art to fully understand the present disclosure, and are not intended to limit the subject matter described in the claims.

### (Embodiment)

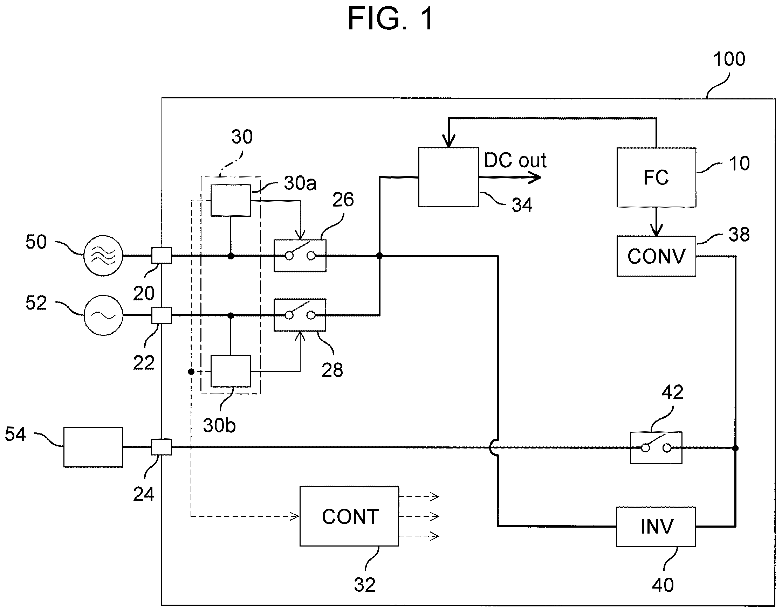

Hereinafter, an embodiment will be described with reference to FIG. 1 to FIG. 3.

### [1-1. Configuration]

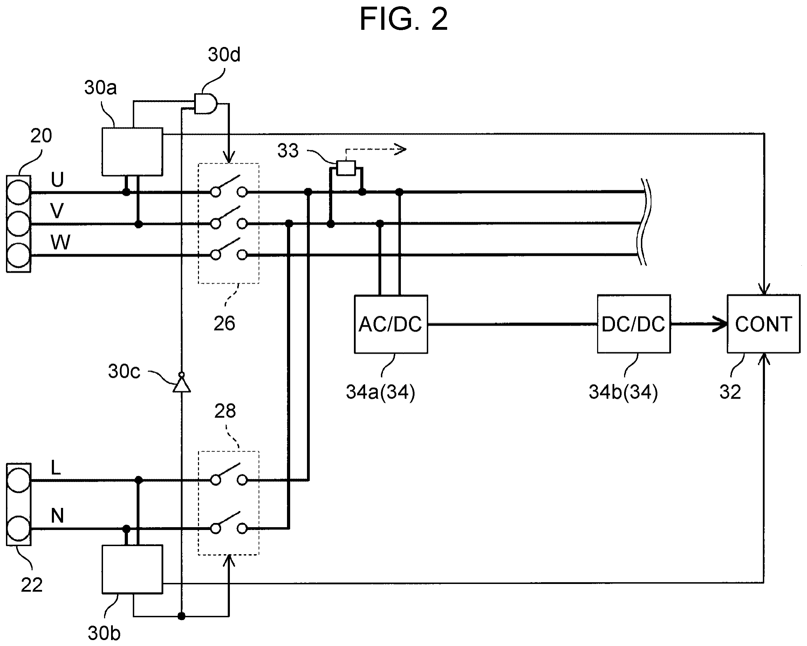

FIG. 1 is a schematic block diagram illustrating a configuration of fuel cell system 100. FIG. 2 is a detailed circuit diagram of a portion of FIG. 1. As illustrated in FIG. 1, fuel cell system 100 includes fuel cell 10, first input and output terminal 20, second input terminal 22, second output terminal 24, and control circuit 32. Fuel cell system 100 is capable of outputting both DC power and AC power to the outside. When first external power source 50 is connected to first input and output terminal 20, AC power is output to the outside. When second external power source 52 is connected to second input terminal 22, DC power is output to the outside. Since the type of output power is automatically determined according to the external power source, no special settings or operations are required. As a result, the installation work of fuel cell system 100 is facilitated.

Fuel cell 10 is an electrochemical device that generates electric power from hydrogen gas and oxidant gas. The form of fuel cell 10 is not particularly limited. Fuel cell 10 is, for example, a polymer electrolyte fuel cell, a solid oxide fuel cell, a phosphate fuel cell, or a molten carbonate fuel cell.

First input and output terminal 20 and second input terminal 22 are terminals to which an external power source for starting fuel cell system 100 is connected. First external power source 50 is connected to first input and output terminal 20. In this case, AC power is output to the outside. Second external power source 52 is connected to the second input terminal. In this case, DC power is output to the outside. First input and output terminal 20 and second input terminal 22 each may include a mechanical switch as a power switch.

First external power source 50 is, for example, an AC power source. In the present embodiment, first input and output terminal 20 serves as both a first input terminal and a first output terminal. This configuration reduces the number of terminals. When the AC power is caused to flow back to first external power source 50, first external power source 50 can be considered as an AC load. First external power source 50 can be a three-phase AC power source.

Second external power source 52 is, for example, an AC power source. It should be noted that second external power source 52 is a power source different from first external power source 50. In the present embodiment, second external power source 52 is a single-phase AC power source. For example, the voltage of AC power from first external power source 50 that is a three-phase AC power source is 200 V (line voltage) and the voltage of AC power from second external power source 52 that is a single-phase AC power source is 200 V (line voltage). Here, the "voltage" is an effective value.

First external power source 50 is, for example, a grid power source. Second external power source 52 may be a grid power source or a power storage system capable of outputting AC power, such as an uninterruptible power supply (UPS). The voltage of second external power source 52 may be equal to or different from the voltage of first external power source 50.

Second output terminal 24 is a terminal to which DC load 54 is connected. The type of DC load 54 is not particularly limited. DC load 54 may include a power conditioning subsystem (PCS). In this case, DC power of various voltages can be used. According to the power conditioning subsystem, it is also possible to use AC power of a voltage and/or frequency different from those of the AC power output from first input and output terminal 20. In other words, it is possible to use fuel cell system 100 according to the present embodiment with no change in a plurality of countries with different commercial power source voltages and/or frequencies.

Control circuit 32 is a circuit that performs predetermined electrical processing. The predetermined electrical processing includes processing for converting the DC power generated by fuel cell 10 to AC power and supplying the AC power to first input and output terminal 20, and for supplying the DC power generated by fuel cell 10 to second output terminal 24. The former processing, i.e., the processing for converting the DC power generated by fuel cell 10 to AC power and supplying the AC power to first input and output terminal 20, is performed when first external power source 50 is connected to first input and output terminal 20. The latter processing, i.e., the processing for supplying the DC power generated by fuel cell 10 to second output terminal 24, is performed when second external power source 52 is connected to second input terminal 22. This configuration eliminates the need for special settings and operations in installation of fuel cell system 100, facilitating the installation work of fuel cell system 100.

Control circuit 32 includes, for example, a microcomputer, memory, and input and output interfaces. The memory stores a control program for operating fuel cell system 100. The control program is read and executed by the microcomputer. Control circuit 32 may include a plurality of microcomputers or a programmable logic device such as an application specific integrated circuit (ASIC) or field programmable gate array (FPGA).

Fuel cell system 100 further includes detection circuit 30. Detection circuit 30 detects the voltage at first input and output terminal 20 and the voltage at second input terminal 22, and outputs a detection signal. The detection signal is input to control circuit 32. Control circuit 32 performs the electrical processing described above in response to obtaining the detection signal from detection circuit 30. According to this configuration, electrical processing that is in accordance with the type of power source connected to fuel cell system 100 can be automatically performed.

Specifically, when a detection signal indicating that first external power source 50 has been connected to first input and output terminal 20 is input to control circuit 32, control circuit 32 performs electrical processing for supplying AC power to first input and output terminal 20. When a detection signal indicating that second external power source 52 has been connected to second input terminal 22 is input to control circuit 32, control circuit 32 performs electrical processing for supplying DC power to second output terminal 24.

In the present embodiment, detection circuit 30 includes first detection circuit 30a and second detection circuit 30b. First detection circuit 30a is electrically connected to first input and output terminal 20. Second detection circuit 30b is electrically connected to second input terminal 22. As illustrated in FIG. 2, first detection circuit 30a detects the voltage between two wires (U-V) selected from the three-phase AC wiring with three wires. Second detection circuit 30b detects the voltage between the two wires (L-N) of the single-phase AC wiring.

Fuel cell system 100 further includes power circuit 34, first relay 26, and second relay 28. Power circuit 34 is a circuit to which AC power is supplied from first external power source 50 and second external power source 52. First relay 26 is disposed on the path from first input and output terminal 20 to power circuit 34. Second relay 28 is disposed on the path from second input terminal 22 to power circuit 34. The AC power from first external power source 50 or second external power source 52 is converted to DC power of a predetermined voltage and supplied to various parts of fuel cell system 100.

As illustrated in FIG. 2, power circuit 34 includes, for example, AC to DC converter 34a and DC to DC converter 34b. AC to DC converter 34a is electrically connected to first input and output terminal 20 via first relay 26 and to second input terminal 22 via second relay 28. The AC power is converted to DC power by AC to DC converter 34a. AC to DC converter 34a includes an isolation transformer, and includes a primary side and a secondary side that are isolated from each other. This electrically separates the high-voltage region for transmitting electric power from the low-voltage region for transmitting information. The DC power is stepped down by DC to DC converter 34b and supplied to control circuit 32. Power circuit 34 may include a plurality of DC to DC converters. After fuel cell 10 starts up, DC power is supplied from fuel cell 10 to power circuit 34. The DC power is regulated to the required voltage by power circuit 34 and then supplied to various parts of fuel cell system 100.

Power circuit 34 is capable of converting AC power with a certain voltage range (e.g., 180 V to 240 V) to DC power. According to this configuration, power circuit 34 can be shared between first external power source 50 and second external power source 52, even when first external power source 50 and second external power source 52 have voltages different from each other. It is also easy to use fuel cell system 100 in a plurality of countries with different grid power source voltages.

First relay 26 is disposed on the path from first input and output terminal 20 to power circuit 34. Second relay 28 is disposed on the path from second input terminal 22 to power circuit 34. Detection circuit 30 switches first relay 26 ON when first external power source 50 is connected to first input and output terminal 20, and switches second relay 28 ON when second external power source 52 is connected to second input terminal 22. In detail, first detection circuit 30a switches first relay 26 in the subsequent stage ON. Second detection circuit 30b switches second relay 28 in the subsequent stage ON. This configuration eliminates the need for special settings and operations in installation of fuel cell system 100.

Detection circuit 30 can recognize the positive and negative voltages of the AC power as pulses, and switch first relay 26 or second relay 28 ON. The voltage at any point on the path from first relay 26 to power circuit 34 is detected by voltage sensor 33. When voltage in the predetermined range (e.g., 180V to 240V) is not input, fuel cell system 100 may not start and an error may be externally notified. This configuration simplifies the configuration of detection circuit 30.

Alternatively, detection circuit 30 (first detection circuit 30a) may be configured to switch first relay 26 ON when first external power source 50 of a predetermined voltage (e.g., 200 ± 10 V) is connected to first input and output terminal 20. Detection circuit 30 (second detection circuit 30b) may be configured to switch second relay 28 ON when second external power source 52 of a predetermined voltage (e.g., 200 ± 10 V) is connected to second input terminal 22.

As illustrated in FIG. 2, in the present embodiment, the two wires extending from second input terminal 22 are connected to two of the three wires extending from first input and output terminal 20 in order to share power circuit 34 between first input and output terminal 20 and second input terminal 22. According to this circuit configuration, when external power sources are connected to both first input and output terminal 20 and second input terminal 22, a short circuit may occur between first external power source 50 and second external power source 52. In order to address this issue, in the present embodiment, when first external power source 50 is connected to first input and output terminal 20 and second external power source 52 is connected to second input terminal 22, detection circuit 30 keeps at least one selected from first relay 26 and second relay 28 OFF. This configuration prevents a short circuit between first external power source 50 and second external power source 52. In other words, fuel cell system 100 includes a fail-safe function for when external power sources are connected to both first input and output terminal 20 and second input terminal 22. The AC power is supplied to power circuit 34 from only one of first input and output terminal 20 and second input terminal 22.

For example, since large facilities such as factories often use a plurality of power sources, including three-phase AC power sources and single-phase AC power sources, the possibility of external power sources being accidentally connected to both first input and output terminal 20 and second input terminal 22 cannot be eliminated. Fuel cell system 100 according to the present embodiment is particularly useful for facilities that include a plurality of power sources because fuel cell system 100 prevents short circuits between power sources even if incorrect wiring connections are made.

When first external power source 50 is connected to first input and output terminal 20 and second external power source 52 is connected to second input terminal 22, detection circuit 30 outputs a detection signal indicating that external power sources have been connected to both first input and output terminal 20 and second input terminal 22. In the present embodiment, control circuit 32 obtains a detection signal from first detection circuit 30a and a detection signal from second detection circuit 30b. When these detection signals are obtained, control circuit 32 externally notifies that an incorrect wiring connection has been made. This configuration also contributes to facilitating the installation work of fuel cell system 100.

How to externally notify that an incorrect wiring connection has been made is not particularly limited. It is possible to externally notify that an incorrect wiring connection has been made in the form of audio information and/or visual information.

When first external power source 50 is connected to first input and output terminal 20 and second external power source 52 is connected to second input terminal 22, both the power supply to first input and output terminal 20 and the power supply to second output terminal 24 may be prohibited.

When first external power source 50 is connected to first input and output terminal 20 and second external power source 52 is connected to second input terminal 22, first relay 26 is switched ON and second relay 28 is kept OFF. Alternatively, second relay 28 is switched ON and first relay 26 is kept OFF. In other words, first relay 26 and second relay 28 have priority levels. When first relay 26 is switched ON, first relay 26 is prioritized. When second relay 28 is switched ON, second relay 28 is prioritized. This configuration also contributes to facilitating the installation work of fuel cell system 100.

As illustrated in FIG. 2, in the present embodiment, detection circuit 30 includes logic circuit 30c and logic circuit 30d to give priorities to first relay 26 and second relay 28. Logic circuit 30c is a NOT circuit. Logic circuit 30d is an AND circuit. The output from second detection circuit 30b is input to logic circuit 30c. The output from first detection circuit 30a and the output from logic circuit 30c are input to logic circuit 30d.

When second external power source 52 is connected to second input terminal 22, second detection circuit 30b switches second relay 28 ON and provides a high (H) signal to logic circuit 30c. Logic circuit 30c then inverts the High (H) signal to a Low (L) signal and outputs the Low (L) signal. When second external power source 52 is not connected to second input terminal 22, logic circuit 30c outputs a High (H) signal. When first external power source 50 is connected to first input and output terminal 20, first detection circuit 30a outputs a High (H) signal. When both of the two inputs of logic circuit 30d are High (H), logic circuit 30d outputs a High (H) signal to switch first relay 26 ON. Otherwise, logic circuit 30d outputs a Low (L) signal to keep first relay 26 OFF. In other words, first relay 26 is switched ON only when first detection circuit 30a outputs a High (H) signal and second detection circuit 30b outputs a Low (L) signal. According to the configuration illustrated in FIG. 2, second input terminal 22 and second relay 28 have higher priorities. With the configuration illustrated in FIG. 2, first input and output terminal 20 and first relay 26 can also be prioritized.

As illustrated in FIG. 2, first relay 26 may include a plurality of relays disposed on the three wires of the three-phase AC wiring. Second relay 28 may include a plurality of relays disposed on the two wires of the single-phase AC wiring. First relay 26, second relay 28, and DC relay 42 to be described below are, for example, mechanical relays or semiconductor relays. When first external power source 50 is a grid power source, first relay 26 is a mechanical relay.

Fuel cell system 100 further includes converter 38, inverter 40, and DC relay 42. Converter 38 can be a DC to DC converter that regulates (i.e., boosts) the voltage of the DC power generated by fuel cell 10 to the required voltage. DC relay 42 is disposed on the path from converter 38 to second output terminal 24. The DC power having a voltage regulated by converter 38 is supplied to second output terminal 24 via DC relay 42. Inverter 40 converts the DC power generated by fuel cell 10 to AC power. In the present embodiment, the DC power output from converter 38 is input to inverter 40. The output terminal of inverter 40 is connected to first input and output terminal via first relay 26.

When DC relay 42 is OFF, the DC power generated by fuel cell 10 is supplied to inverter 40. The DC power is converted to AC power by inverter 40 so that the AC power flows back to first external power source 50 through first input and output terminal 20. Thus, the electrical processing performed by control circuit 32 includes the processing of controlling inverter 40 and DC relay 42. Inverter 40 and DC relay 42 are controlled by control circuit 32, so that AC power or DC power is selectively output to the outside.

### [1-2. Operation]

The operation of fuel cell system 100 configured as described above will be described below.

When first external power source 50 is connected to first input and output terminal 20, detection circuit 30 switches first relay 26 ON. Second relay 28 is OFF. This provides three-phase AC power from first external power source 50 to power circuit 34. When second external power source 52 is connected to second input terminal 22, detection circuit 30 switches second relay 28 ON. First relay 26 is OFF. This provides single-phase AC power from second external power source 52 to power circuit 34. In power circuit 34, DC power of the required voltage (e.g., 24 V, 12 V, 5 V) is generated and supplied to various parts, including control circuit 32 and auxiliary equipment of fuel cell 10. Control circuit 32 performs control for operating fuel cell 10. This starts up fuel cell 10. The auxiliary equipment for fuel cell 10 includes devices such as a pump, a blower, and a valve. These devices are controlled by control circuit 32.

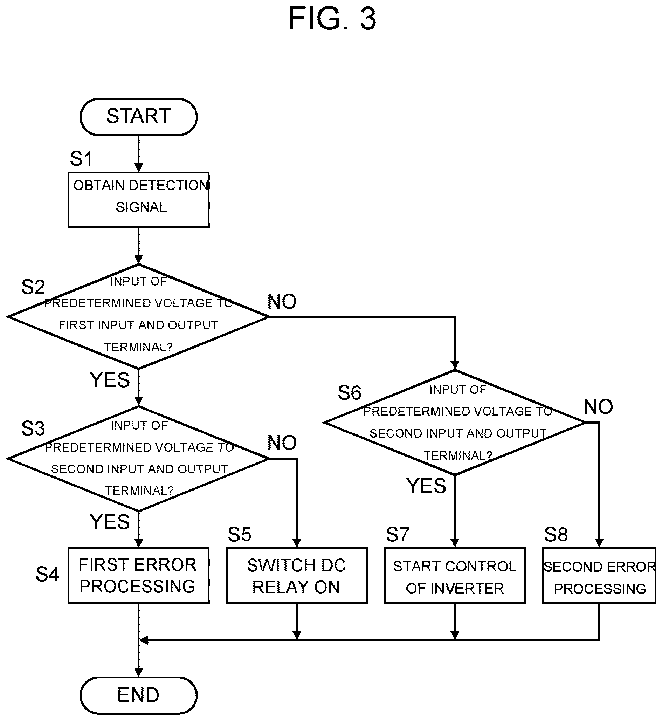

FIG. 3 is a flowchart of the processing performed by the microcomputer in control circuit 32 to determine the type of electric power to be output. Once DC power can be extracted from fuel cell 10, each of the processing illustrated in FIG. 3 is performed.

In step S1, a detection signal is obtained from detection circuit 30. In detail, a detection signal indicating that first external power source 50 has been connected to first input and output terminal 20 is obtained from first detection circuit 30a, and a detection signal indicating that second external power source 52 has been connected to second input terminal 22 is obtained from second detection circuit 30b.

In step S2, the presence or absence of an input of a predetermined voltage (e.g., three-phase AC voltage of 200 V) to first input and output terminal 20 is determined based on the signal obtained from detection circuit 30.

When there is an input of the predetermined voltage to first input and output terminal 20, in step S3, the presence or absence of an input of a predetermined voltage (e.g., single-phase AC voltage of 200 V) to second input terminal 22 is determined based on the signal obtained from detection circuit 30.

When there is no input of the predetermined voltage to second input terminal 22, the processing of switching DC relay 42 ON is performed in step S5. As a result, the DC power generated by fuel cell 10 is supplied to DC load 54 via DC relay 42 and second output terminal 24.

When there is a voltage input to both first input and output terminal 20 and second input terminal 22, first error processing is performed in step S4. The first error processing is for externally notifying that an incorrect wiring connection has been made. The external notification is made, for example, in the form of audio and/or visual information. Fuel cell system 100 may include an audio device and/or a display device to externally notify that an error has occurred.

When there is no input of the predetermined voltage to first input and output terminal 20, in step S6, the presence or absence of an input of a predetermined voltage (e.g., single-phase AC voltage of 200 V) to second input terminal 22 is determined based on the signal obtained from detection circuit 30.

When there is an input of the predetermined voltage to second input terminal 22, inverter 40 starts to be controlled in step S7. In other words, control of inverter 40 is started so that the DC power generated by fuel cell 10 is converted to AC power. The AC power output from inverter 40 is supplied to first external power source 50 as an AC load via first relay 26 and first input and output terminal 20.

When there is no voltage input to both first input and output terminal 20 and second input terminal 22, second error processing is performed in step S8. When there is no voltage input to both first input and output terminal 20 and second input terminal 22 even though control circuit 32 has started, there is a high probability that some kind of problem has occurred. The second error processing externally notifies that some kind of problem has occurred.

### [1-3. Advantageous Effects, etc.]

As described above, in the present embodiment, control circuit 32 performs electrical processing for, when first external power source 50 is connected to the first input terminal, converting DC power generated by fuel cell 10 to AC power and supplying the AC power to the first output terminal, and for, when second external power source 52 is connected to second input terminal 22, supplying the DC power generated by the fuel cell to the second output terminal. This configuration eliminates the need for special settings and operations in installation of fuel cell system 100, facilitating the installation work of fuel cell system 100.

Moreover, in the present embodiment, it may be that when first external power source 50 is connected to the first input terminal and second external power source 52 is connected to second input terminal 22, control circuit 32 externally notifies that an incorrect wiring connection has been made. This configuration also contributes to facilitating the installation work of fuel cell system 100.

Moreover, in the present embodiment, fuel cell system 100 may further include detection circuit 30 that detects a voltage of the first input terminal and a voltage of second input terminal 22 to output a detection signal. Control circuit 32 may perform electrical processing in response to obtaining the detection signal from detection circuit 30. According to this configuration, electrical processing that is in accordance with the type of power source connected to fuel cell system 100 can be automatically performed.

Moreover, in the present embodiment, fuel cell system 100 may further include detection circuit 30 that detects a voltage of the first input terminal and a voltage of second input terminal 22; power circuit 34 to which electric power is supplied from first external power source 50 and second external power source 52; first relay 26 disposed on a path from the first input terminal to power circuit 34; and second relay 28 disposed on a path from second input terminal 22 to power circuit 34. Detection circuit 30 may switch first relay 26 ON when first external power source 50 is connected to the first input terminal and switches second relay 28 ON when second external power source 52 is connected to second input terminal 22. This configuration eliminates the need for special settings and operations in installation of fuel cell system 100.

Moreover, in the present embodiment, when first external power source 50 is connected to the first input terminal and second external power source 52 is connected to second input terminal 22, detection circuit 30 may keep at least one selected from first relay 26 and second relay 28 OFF. This configuration prevents a short circuit between first external power source 50 and second external power source 52.

Moreover, in the present embodiment, fuel cell system 100 may further include converter 38 that regulates a voltage of the DC power generated by fuel cell 100; inverter 40 that converts the DC power generated by fuel cell 10 to the AC power; and DC relay 42 that is disposed on a path from converter 38 to second output terminal 24. The electrical processing may include processing for controlling inverter 40 and DC relay 42. Inverter 40 and DC relay 42 are controlled by control circuit 32, so that AC power or DC power is selectively output to the outside.

Moreover, in the present embodiment, it may be that first external power source 50 is an AC power source and the first input terminal serves as the first output terminal. This configuration reduces the number of terminals.

### INDUSTRIAL APPLICABILITY

The technique according to the present disclosure is useful for fuel cell systems that are capable of outputting both DC power and AC power to the outside.

### REFERENCE MARKS IN THE DRAWINGS

- 10: fuel cell
- 20: first input and output terminal (first input terminal, first output terminal)
- 22: second input terminal
- 24: second output terminal
- 26: first relay
- 28: second relay
- 30: detection circuit
- 30a: first detection circuit
- 30b: second detection circuit
- 30c, 30d: logic circuit
- 32: control circuit
- 33: voltage sensor
- 34: power circuit
- 34a: AC to DC converter
- 34b: DC to DC converter
- 38: converter
- 40: inverter
- 42: DC relay
- 50: first external power source
- 52: second external power source
- 54: DC load
- 100: fuel cell system

## Claims

1. A fuel cell system comprising:
a fuel cell;
a first input terminal to which a first external power source is connected;
a second input terminal to which a second external power source is connected;
a first output terminal to which an alternating current (AC) load is connected;
a second output terminal to which a direct current (DC) load is connected; and
a control circuit that performs electrical processing for, when the first external power source is connected to the first input terminal, converting DC power generated by the fuel cell to AC power and supplying the AC power to the first output terminal, and for, when the second external power source is connected to the second input terminal, supplying the DC power generated by the fuel cell to the second output terminal.

2. The fuel cell system according to claim 1,
wherein, when the first external power source is connected to the first input terminal and the second external power source is connected to the second input terminal, the control circuit externally notifies that an incorrect wiring connection has been made.

3. The fuel cell system according to claim 1, further comprising:
a detection circuit that detects a voltage of the first input terminal and a voltage of the second input terminal to output a detection signal, and
the control circuit performs the electrical processing in response to obtaining the detection signal from the detection circuit.

4. The fuel cell system according to claim 1, further comprising:
a detection circuit that detects a voltage of the first input terminal and a voltage of the second input terminal;
a power circuit to which electric power is supplied from the first external power source and the second external power source;
a first relay that is disposed on a path from the first input terminal to the power circuit; and
a second relay that is disposed on a path from the second input terminal to the power circuit,
wherein the detection circuit switches the first relay ON when the first external power source is connected to the first input terminal and switches the second relay ON when the second external power source is connected to the second input terminal.

5. The fuel cell system according to claim 4,
wherein, when the first external power source is connected to the first input terminal and the second external power source is connected to the second input terminal, the detection circuit keeps at least one selected from the first relay and the second relay OFF.

6. The fuel cell system according to claim 1, further comprising:
a converter that regulates a voltage of the DC power generated by the fuel cell;
an inverter that converts the DC power generated by the fuel cell to the AC power; and
a DC relay that is disposed on a path from the converter to the second output terminal,
wherein the electrical processing includes processing for controlling the inverter and the DC relay.

7. The fuel cell system according to claim 1,
wherein the first external power source is an AC power source, and
the first input terminal serves also as the first output terminal.
